# EUROPEAN PATENT SPECIFICATION

(11) **EP 1 882 626 B1**
(45) Date of publication and mention of the grant of the patent: **04.11.2009**
(21) Application number: 07113093.4
(22) Date of filing: 25.07.2007
(51) Int. Cl.: B62D 33/06, B62D 21/15

(54) **Front cross member for the cab of a truck, cab and relative method of production**
Vorderer Querträger für ein Lastwagenführerhaus, Führerhaus und entsprechendes Herstellungsverfahren
Élément transversal avant de cabine de camion, cabine et procédé de fabrication correspondant

(30) Priority: 27.07.2006 IT MI20061478
(43) Date of publication of application: 30.01.2008
(73) Proprietor: IVECO S.p.A., 10156 Torino (IT)
(72) Inventor: Giovine, Mauro, 10090 Castiglione Torinese (IT)
(74) Representative: Borsano, Corrado

(56) References cited:
- WO-A-02/070327
- WO-A-2005/102825
- JP-A- 10 007 029

## Description

### FIELD OF THE INVENTION

The present invention relates to a front cross member for the cab of a truck, in particular a cross member fitted to the underside of the floor of the cab.

### PRIOR ART

Cabs for trucks usually comprise a front cross member, arranged at floor level, consisting of a metal reinforcing structure, which may be a box-type structure and is usually attached to the front wall of the cab and below the front end of the floor which is made of metal plate. The floor is provided with a series of box-type reinforcement structures, in particular two longitudinal box-type structures that are usually arranged at the two sides of the central hood (the raised central section of the floor running longitudinally that separates the driver and passenger areas of the cab), the front ends of which are welded to the cross member. The front suspensions of the vehicle chassis in relation to the cab are generally attached to said cross member, but said suspensions must also be attached to other parts of the floor, usually box-type structures.

WO 02/070327 discloses such a cab according to the preamble of claim 1.

This solution, which is widely used on today's vehicles, is not satisfactory for several reasons. Assembly involves a series of complex operations, with butt welds required in the longitudinal box-type structures and the arrangement of attachment points for the front suspensions on the floor and on the cross member. An even more important problem regards safety. In trucks with a flat-fronted cab, in which the engine is located entirely underneath the cab, as is generally the case in industrial vehicles, in the event of a frontal impact with a sufficiently high obstacle, the driver and the passenger sitting next to him are particularly exposed to the crushing of the cab. In the event of impact, the structures are not capable of absorbing a sufficient amount of energy with respect to the deformation that is caused, providing inadequate protection for the occupants of the cab, even in case of collisions at relatively low speeds.

It is therefore desirable to produce a structure capable of guaranteeing greater safety and which allows the various parts of the cab to be assembled more simply, without making the structure too heavy with respect to the prior art.

### SUMMARY

The problems described above have now been solved according to the present invention with a front cross member with a floor for the cab of a truck, comprising a first transverse member and at least two main longitudinal members attached each to one side of said first member, characterized in that said members of said cross member being joined inferiorly and adherently to the front part of a floor for said cab said members form box-type structures in cooperation with said floor, said main longitudinal members receive in part longitudinal box-type structures belonging to said floor.

According to a preferred embodiment, the cross member comprises a second transverse member joined to it by said main longitudinal members.

The cross member preferably also comprises two side members, also arranged longitudinally, which join the transverse members at the two ends.

The cross member may comprise additional longitudinal members.

The invention also relates to a method of production of a cab for a truck comprising the joining of a cross member as described above to a floor, or to several sections of floor, so that in part the longitudinal box-type structures of the floor are received into said main longitudinal members.

Said joining can be achieved by means of welding, in particular spot welding or using another known method, such as glueing.

The members may, for example, have a U-shaped or L-shaped profile. According to a particular embodiment the main longitudinal members have U-shaped profiles. The invention relates in particular to that set forth in the appended claims.

### LIST OF DRAWINGS

The present invention will now be illustrated through a detailed description of the preferred, but not exclusive embodiments, provided merely by way of example, with the aid of the drawings attached hereto, in which:
figure 1 is a schematic diagram of a perspective view of a cross member according to the present invention, from the top of the part to be joined to the floor of a cab for a truck;
figure 2 is a schematic diagram of a perspective view of the cross member in figure 1 seen from the bottom;
figure 3 is a schematic diagram of a perspective view of the cross member in the previous figures joined to the floor of the cab of a truck;
figure 4 is a schematic diagram of a perspective view of the cross member joined to the floor of the cab of a truck in the previous figures, with the front suspensions of the cab assembled.

### DETAILED DESCRIPTION OF A PREFERRED EMBODIMENT

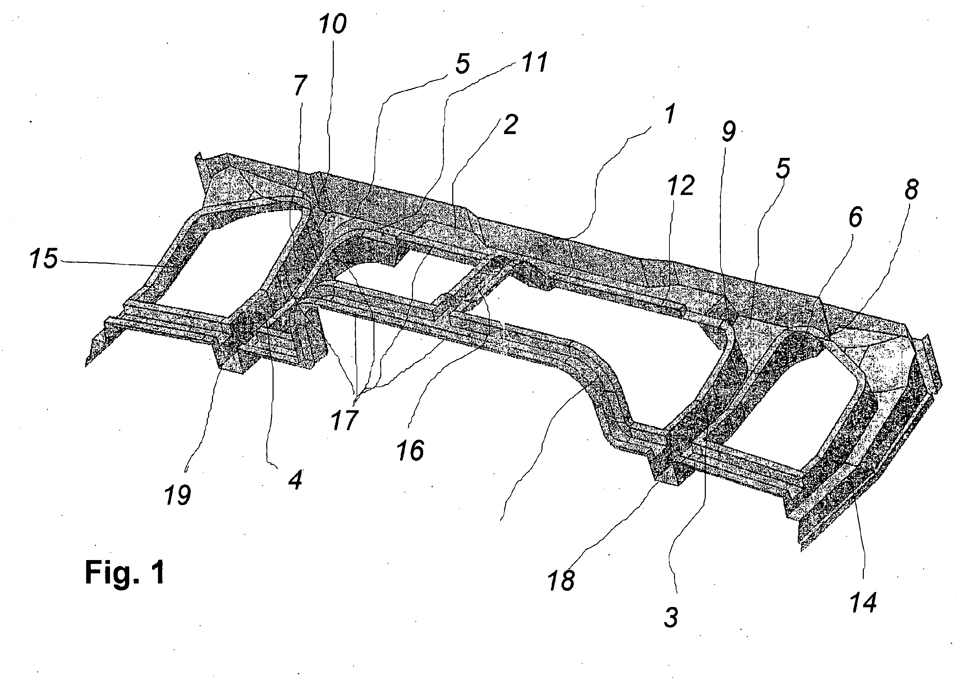

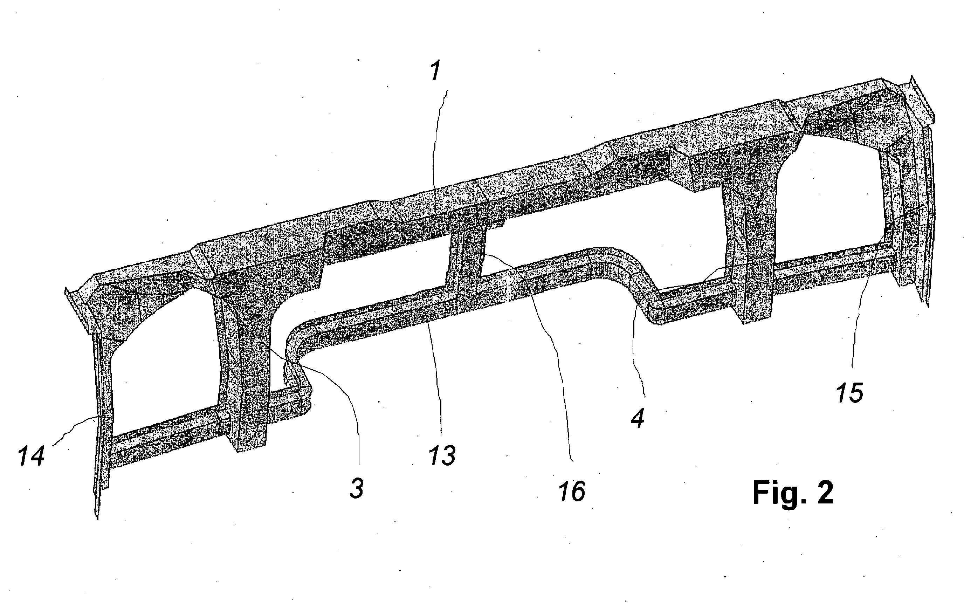

With reference to figures 1 and 2, showing it respectively in perspective views from the top, i.e. the side to be joined to the floor of a cab for a truck, and from the bottom, a cross member according to an embodiment of the invention is described. The cross member comprises a first transverse member 1, to be arranged perpendicularly to the direction of travel of the vehicle, said member having a substantially U-shaped profile. The front wall 2 is preferably of a suitable shape for attachment to structures on the front wall of the cab. The main longitudinal members 3 and 4 are attached to the first transverse member in a suitable way, preferably by means of welding; according to an embodiment of the invention said members preferably also have a U-shaped profile the depth of which may be the same as that of the first transverse member, so that the rear wall 5 is substantially continuous in correspondence with the joint.

According to a possible embodiment, the main longitudinal members become wider as they extend towards the first transverse member, at least for a portion of their length, that is in the areas of connection 6 and 7. The side walls 8, 9, 10 and 11 of the longitudinal members are preferably attached to the internal side wall 12 of the first transverse member 1 by means of fittings. This, plus the widening described above contribute to the absorption of energy by the structure in case of impact.

According to a preferred embodiment, the cross member comprises a second transverse member 13, joined to the main longitudinal members, for example close to the rear ends thereof. The member may follow the line of the floor of the cab. In the case illustrated in the drawing it follows the line of the central hood. Also in this case it preferably has a U-shaped profile.

According to a preferred embodiment, the ends of the transverse members are also joined by means of other side members, 14 and 15. According to embodiment of the invention, these are suitable to be attached to the outside edges of the walls of the cab, in correspondence with the mudguards. Different kinds of members may be used depending on the parts to which they are to be attached, for example they may have an L-shaped profile.

Other additional members suitable to reinforce the structure may be envisaged, such as the additional central member 16, that joins the two transverse members.

The various members can comprise flaps 17, suitable to allow them to be attached to the floor of the cab. For example the joint may be achieved by means of overlapping and welding, for instance spot welding.

The main longitudinal members are suitable to receive in part longitudinal box-type structures belonging to said floor. For that purpose it can be observed that they are open at the end 18, 19 opposite the end towards the first transverse member.

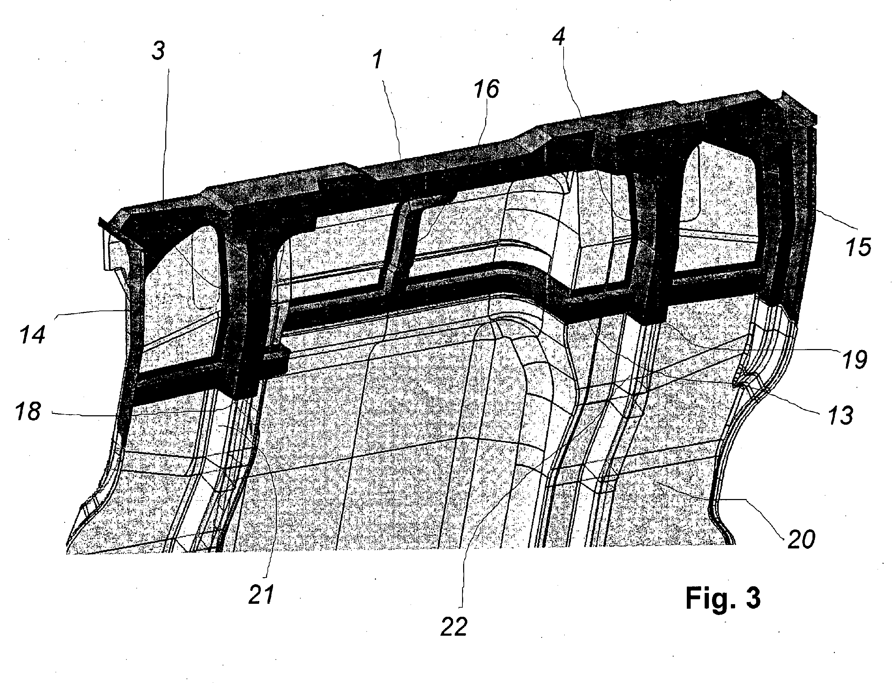

Figure 3 shows the cross member according to the present invention attached to the cab of the vehicle, in particular to the floor 20 of said cab. It can be observed that the floor extends in correspondence with said cross member up to the first transverse member 1 and to the side members 14 and 15, and can be welded to the flaps 17, to form box-type structures in correspondence with at least the main longitudinal members 3 and 4, the second transverse member 13 and the additional member 16. On its underside the floor incorporates the longitudinal box-type structures, which may also comprise U sections having dimensions such that the end thereof can be received inside the main longitudinal members of the cross member. The shape of the cross member is such that it is able to adhere to the floor, with its structures, as illustrated in the drawing. The length of the longitudinal members of the cross member is such that they extend for an appropriate length of the floor, for example so that the second transverse member is arranged behind the driver's pedals. For example the distance, measured on a horizontal plane between the first and second transverse members can be between 0.3 m and 1 m, for example approximately 0.5 m. The ends of the longitudinal box-type structures are received for an appropriate length and are preferably of a corresponding shape, and have a smaller cross-section than the main longitudinal members, so as to be able to be contained by the latter. The dimensions are preferably such that the outer walls of said longitudinal box-type structures come into contact with the inside walls of the main longitudinal members, or there may be a slight clearance. The box-type structures can extend as far as the first transverse member, or only extend for a portion of the main longitudinal members. According to embodiment they only extend for a portion of the length of the latter and not up to the connection with the first transverse member.

The expert in the field will be able to define the thickness of the metal plate used to make the cross member so as to provide a structure with the appropriate strength. Said metal plate may have a uniform thickness or different parts may have different thicknesses. According to embodiment said metal plate may be thicker than that used to produce the floor and/or the relative longitudinal box-type structures, making it possible to increase the strength of the structures without any excessive increase in their weight. Other methods for absorbing energy may be envisaged, such as bellow sections in the main longitudinal members, or wedges, in correspondence with the ends of the main longitudinal members joined to the first transverse member, inside the cross member and suitable to enter the ends of the box-type structures belonging to the floor in case of crushing due to a frontal impact.

The cross member according to the present invention provides adequate protection for the occupants of the cab against the risk of crushing of the front of the cab. It also simplifies the operations required to join the floor to the front structure, eliminating the need for the box-type structures belonging to the floor to extend as far as the transverse member furthest forward and having to be butt welded to the latter.

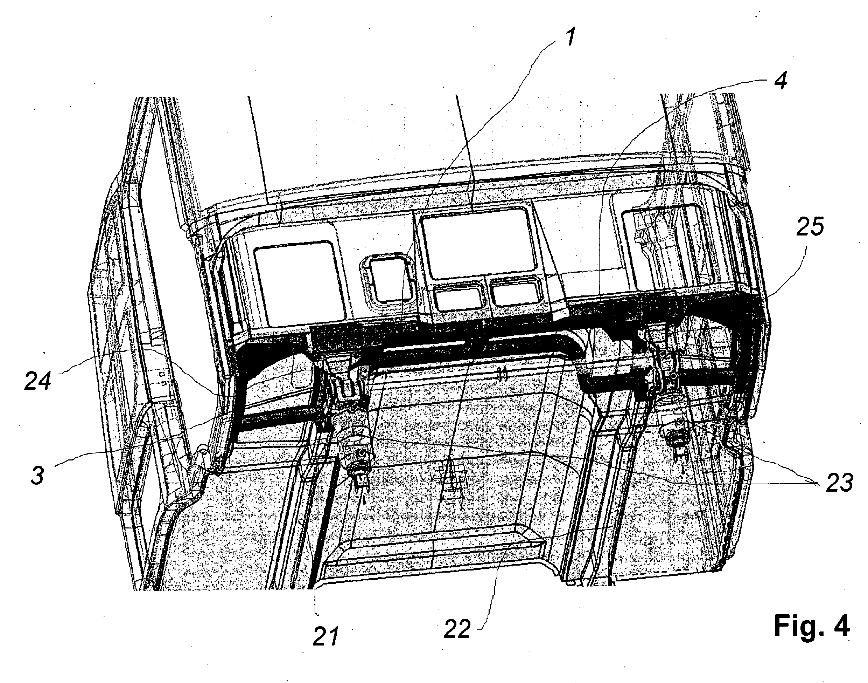

Moreover, this solution eliminates the need for the front suspensions to be attached to the floor and also to the front member. As illustrated in figure 4, the suspensions, collectively indicated by number 23, can be secured, according to the present invention, to the cross member only for example using the supports 25 and 26 attached to the first transverse member and to the main longitudinal members. The cross member provides a firmer anchorage for the suspensions and the fact that they are attached to a single element reduces the possibility of errors during assembly. Unlike with the systems in the prior art, the suspensions or the parts thereof can be attached to the cross member before this is joined to the floor.

The invention also relates to a cab for a truck comprising: a floor having two longitudinal box-type structures and a cross member as described above, in which said longitudinal box-type structures are partly housed in the main longitudinal members of the cross member. The cab preferably comprises front suspensions, attached to said cross member in correspondence with said main longitudinal members.

## Claims

1. Front cross member with a floor for the cab of a truck, comprising a first transverse member (1) and at least two main longitudinal members (3, 4) attached each to one side of said first member, **characterized in that** said members of said cross member being joined inferiorly and adherently to the front part of a floor (20) for said cab, said members form box-type structures in cooperation with said floor, said main longitudinal members (3, 4) partly receive in longitudinal box-type structures (21, 22) belonging to said floor.

2. Cross member with a floor according to claim 1, **characterized in that** said cross member comprises a second transverse member (16) joined to it by said main longitudinal members.

3. Cross member with a floor according to any of the previous claims, **characterized in that** also comprises two side members (14, 15), which are also arranged longitudinally.

4. Cross member with a floor according to claims 2 and 3, **characterized in that** said side members connect the transverse members at the two ends.

5. Cross member with a floor according to any of the previous claims, **characterized in that** said cross member comprises flaps (17) that allow it to be attached to the floor of the cab.

6. Cross member with a floor according to any of the previous claims, **characterized in that** at least said main longitudinal members have a U-shaped profile.

7. Cross member with a floor according to any of the previous claims, **characterized in that** said first transverse member has a front wall (2) of a suitable shape for attachment to structures on the front wall of the cab.

8. Cross member with a floor according to any of the previous claims, **characterized in that** said cross member is suitable for attaching front suspensions (23) for the cab.

9. Method of production of a cab for a truck comprising the joining of a cross member according to any of the previous claims to a floor, or to several sections of floor, so that in part the longitudinal box-type structures (21, 22) of the floor are received into said main longitudinal members.

10. Method according to claim 9, **characterized in that** said joint is achieved by means of welding, preferably spot welding.

11. Cab for truck comprising:
a floor incorporating two longitudinal box-type structures and
a cross member according to claims 1 to 8, in which said longitudinal box-type structures are in part received into the main longitudinal members of the cross member.

12. Cab according to claim 11, comprising front suspensions (23), attached to said cross member in correspondence with said main longitudinal members.

## Patentansprüche

1. Vorderer Querträger mit einem Boden für das Führerhaus eines Lastwagens, umfassend ein erstes Querelement (1) und zumindest zwei Hauptlängselemente (3, 4), die jeweils an einer Seite des ersten Elements angebracht sind, **dadurch gekennzeichnet, dass** die Elemente des Querträgers tiefer liegend als das und anhaftend an dem Frontteil eines Bodens (20) des Führerhauses angebracht sind, wobei die Elemente zusammen mit dem Boden Boxtypstrukturen bilden, wobei die Hauptlängselemente (3, 4) teilweise längs verlaufende Boxtypstrukturen (21, 22), die zu dem Boden gehören, aufnehmen.

2. Querträger mit einem Boden nach Anspruch 1, **dadurch gekennzeichnet, dass** der Querträger ein zweites Querelement (16) umfasst, das durch die Hauptlängselemente an ihm angebracht ist.

3. Querträger mit einem Boden nach einem der vorstehenden Ansprüche, **dadurch gekennzeichnet, dass** der Querträger auch zwei Seitenelemente (14, 15) umfasst, die auch in Längsrichtung angeordnet sind.

4. Querträger mit einem Boden nach Anspruch 2 und 3, **dadurch gekennzeichnet, dass** die Seitenelemente die Querelemente an den zwei Enden verbinden.

5. Querträger mit einem Boden nach einem der vorstehenden Ansprüche, **dadurch gekennzeichnet, dass** der Querträger Klappen (17) umfasst, die es ihm erlauben, an dem Boden der Kabine angebracht zu werden.

6. Querträger mit einem Boden nach einem der vorstehenden Ansprüche, **dadurch gekennzeichnet, dass** zumindest die Hauptlängselemente ein U-förmiges Profil aufweisen.

7. Querträger mit einem Boden nach einem der vorstehenden Ansprüche, **dadurch gekennzeichnet, dass** das erste Querelement eine Frontwand (2) einer geeigneten Form zum Anbringen an Strukturen an der Frontwand der Kabine aufweist.

8. Querträger mit einem Boden nach einem der vorstehenden Ansprüche, **dadurch gekennzeichnet, dass** der Querträger zum Anbringen von Frontaufhängungen (23) für die Kabine geeignet ist.

9. Verfahren zum Herstellen einer Kabine für einen Lastwagen, umfassend das Anbringen eines Querträgers nach einem der vorstehenden Ansprüche an einem Boden oder an mehreren Bodenabschnitten, so dass zum Teil die längs verlaufenden Boxtypstrukturen (21, 22) des Bodens in den Hauptlängselementen aufgenommen werden.

10. Verfahren nach Anspruch 9, **dadurch gekennzeichnet, dass** die Anbringung durch Schweißen, bevorzugt Punktschweißen erreicht wird.

11. Kabine für einen Lastwagen, umfassend:
einen Boden mit zwei längs verlaufenden Boxtypstrukturen und einen Querträger nach Anspruch 1 bis 8, bei dem die längs verlaufenden Boxtypstrukturen teilweise in den Hauptlängselementen des Querträgers aufgenommen werden.

12. Kabine nach Anspruch 11, umfassend Frontaufhängungen (23), die an dem Querträger in Übereinstimmung mit den Hauptlängselementen angebracht sind.

## Revendications

1. Traverse avant avec un plancher pour la cabine d'un camion, comportant un premier élément transversal (1) et au moins deux éléments longitudinaux principaux (3, 4) fixés chacun sur un côté dudit premier élément, **caractérisée en ce que** lesdits éléments de ladite traverse sont assemblés de manière inférieure et de manière adhérente à la partie avant d'un plancher (20) pour ladite cabine, lesdits éléments forment des structures de type caisson en coopération avec ledit plancher, lesdits éléments longitudinaux principaux (3, 4) sont partiellement reçus dans des structures longitudinales de type caisson (21, 22) appartenant audit plancher.

2. Traverse avec un plancher selon la revendication 1, **caractérisée en ce que** ladite traverse comporte un second élément transversal (16) assemblé à celle-ci par lesdits éléments longitudinaux principaux.

3. Traverse avec un plancher selon l'une quelconque des revendications précédentes, **caractérisée en ce que** ladite traverse comporte également deux éléments latéraux (14, 15) qui sont également agencés longitudinalement.

4. Traverse avec un plancher selon les revendications 2 et 3, **caractérisée en ce que** lesdits éléments latéraux relient les éléments transversaux aux deux extrémités.

5. Traverse avec un plancher selon l'une quelconque des revendications précédentes, **caractérisée en ce que** ladite traverse comporte des rabats (17) qui permettent de la fixer au plancher de la cabine.

6. Traverse avec un plancher selon l'une quelconque des revendications précédentes, **caractérisée en ce qu'**au moins lesdits éléments longitudinaux principaux ont un profil en forme de U.

7. Traverse avec un plancher selon l'une quelconque des revendications précédentes, **caractérisée en ce que** ledit premier élément transversal a une paroi avant (2) ayant une forme adaptée pour une fixation à des structures sur la paroi avant de la cabine.

8. Traverse avec un plancher selon l'une quelconque des revendications précédentes, **caractérisée en ce que** ladite traverse est adaptée pour une fixation de suspensions avant (23) pour la cabine.

9. Procédé de production d'une cabine pour un camion, comportant l'étape consistant à assembler une traverse selon l'une quelconque des revendications précédentes à un plancher, ou à plusieurs parties de plancher, de telle sorte que les structures longitudinales de type caisson (21, 22) du plancher sont partiellement reçues dans lesdits éléments longitudinaux principaux.

10. Procédé selon la revendication 9,
**caractérisé en ce que** ledit assemblage est obtenu au moyen d'un soudage, de préférence un soudage par points.

11. Cabine pour camion comportant :
un plancher incorporant deux structures longitudinales de type caisson et une traverse selon les revendications 1 à 8, lesdites structures longitudinales de type caisson étant en partie reçues dans les éléments longitudinaux principaux de la traverse.

12. Cabine selon la revendication 11, comportant des suspensions avant (23), fixées sur ladite traverse en correspondance avec lesdits éléments longitudinaux principaux.
